# EUROPÄISCHE PATENTSCHRIFT

(11) **EP 2 795 201 B1**
(45) Veröffentlichungstag und Bekanntmachung des Hinweises auf die Patenterteilung: **04.04.2018**
(21) Anmeldenummer: 12717263.3
(22) Anmeldetag: 19.04.2012
(51) Int. Cl.: F24J 2/52, H02S 20/30, H02S 30/20, H02S 10/40

(54) **MOBILE GENERATORVORRICHTUNG UND KÜHLSYSTEM**
MOBILE GENERATOR DEVICE AND COOLING SYSTEM
DISPOSITIF GÉNÉRATEUR MOBILE ET SYSTÈME DE REFROIDISSEMENT

(30) Priorität: 20.12.2011 DE 102011121553
(43) Veröffentlichungstag der Anmeldung: 29.10.2014
(73) Patentinhaber: B Medical Systems S.à r.l., 9809 Hosingen (LU)
(72) Erfinder: HOFFMANN, Andreas, 54673 Ammeldingen (DE); PINTO, Admilson, 54298 Aach (DE); SCHRAMER, Uwe, 54666 Irrel (DE)
(74) Vertreter: ARC-IP
(86) Internationale Anmeldenummer: PCT/EP2012/057105
(87) Internationale Veröffentlichungsnummer: WO 2013/091906

(56) Entgegenhaltungen:
- EP-A2- 2 256 433
- DE-A1- 10 050 480
- DE-A1-102005 033 545
- DE-U1-202004 010 896
- DE-U1-202010 015 848
- FR-A1- 2 694 744
- JP-A- 2006 073 606
- US-A- 4 421 943
- US-A1- 2009 058 352
- US-A1- 2010 212 714

## Beschreibung

Die vorliegende Erfindung betrifft eine mobile Generatorvorrichtung ähnlich des aus der aus der DE 20 2004 010 896 U1 bekannten tragbaren Solar-Aufladegeräts mit wenigstens einem ausrichtbaren Solarpaneel, wie dies beispielsweise aus der US 4 421 943 bekannt ist, wobei das Solarpaneel in eine Transportposition und wenigstens eine Betriebsposition bewegbar ist und ein Kühlsystem mit einer mobilen Generatorvorrichtung, einer Steuerung und einer Kühlvorrichtung, insbesondere einer Kühltruhe, mit wenigstens einem Kühlkreislauf, wobei der Kühlkreislauf einen Kompressor, einen Verdampfer und einen Kondensator aufweist. Entsprechende Kühlboxen sind beispielsweise aus der DE 100 50 480 A1 und der US 2009/0058352 bekannt.

Für gewöhnlich werden solche Generatorvorrichtungen und Kühlsysteme in abgelegenen Gebieten, insb. in Entwicklungsländern eingesetzt, in welchen eine stabile und sichere Energieversorgung unter normalen Umständen nicht gewährleistet werden kann. Deshalb hat es sich als praktikabel herausgestellt, die für den Betrieb notwendige Energie photovoltaisch zu erzeugen, da die solare Einstrahlung in den meisten Entwicklungsländern über das gesamte Jahr ausreichend hoch ist. Somit können auch empfindliche Güter, wie beispielsweise kühlungsbedürftige medizinische Produkte, sicher gelagert werden, wodurch die Lebensqualität der dort ansässigen Menschen verbessert werden kann.

Um dem zu begegnen hat die Weltgesundheitsorganisation (World Health Organisation WHO) einen Katalog mit Mindestkriterien aufgestellt, welcher von der verwendeten Generatorvorrichtung und von der verwendeten Kühlausrüstung für den Transport und die Lagerung von medizinischen Produkten zu erfüllen ist. Bei den Generatorvorrichtungen des Standes der Technik, die diese Kriterien erfüllen, bedeutet dies jedoch, dass zum Betrieb in der Regel vordefinierte Installationsaufbauten notwendig sind. Beispielsweise werden die Solarpaneele auf einem Bodensockel verankert oder an Wänden und Dächern befestigt. In abgelegenen Gebieten fehlt es aber oft an der für die Aufstellung und Inbetriebnahme notwendigen Infrastruktur. Geeignetes Fachpersonal wie Elektriker, Mechaniker, Schweißer oder Maurer müssen bisweilen zur Aufstellung und Inbetriebnahme der Anlage extern hinzugezogen werden. Dies macht die Anlage teuer und bereitet auch bei Wartung und Instandhaltung Probleme. Ferner sind dadurch die bekannten Anlagen auch in keiner Weise flexibel einsetzbar, sondern nur ortsgebunden zu verwenden bzw. es bedarf erneut eines großen Aufwands um eine derartige Vorrichtung zu bewegen.

Hinzukommt, dass die bekannten Vorrichtungen nur schwerlich zu Transportieren sind und es häufig zu Transportschäden an den empfindlichen Solarpaneelen kommt, insbesondere wenn der Transport durch unwegsames Gelände oder auch durch Gewässer führt.
Somit ist es Aufgabe der vorliegenden Erfindung, ein mobiles Generatorsystem zur photovoltaischen Energieerzeugung aufzuzeigen, welches die Kriterien der WHO erfüllt und dabei ohne Installationsaufbauten auskommt, gut zu transportieren ist und bei welchem Transportschäden der Solarpaneele vermieden werden können. Ferner ist es Aufgabe der vorliegenden Erfindung, ein Kühlsystem aufzuzeigen, dessen Energieversorgung über ein erfindungsgemäßes mobiles Generatorsystem bereitgestellt wird.
Die Lösung der Aufgabe gelingt mit einer mobilen Generatorvorrichtung nach Anspruch 1 und einem Kühlsystem nach Anspruch 16. Vorteilhafte Weiterbildungen werden in den Unteransprüchen beschrieben.
Die erfindungsgemäße mobile Generatorvorrichtung weist eine Gehäuseschale mit einem Randbereich auf, wobei das Solarpaneel gelenkig mit der Gehäuseschale verbunden ist, sodass das Solarpaneel in der Transportposition innerhalb der Gehäuseschale ist und nicht über den Randbereich hinausragt. Mit anderen Worten kann das Solarpaneel zum Transport in die Schale geschwenkt werden. Somit ist das Paneel sicher gegen Stoß- und/ oder andere Transportschäden geschützt. Ferner erlaubt dies auch einen einfachen und leichten Transport der Generatorvorrichtung zu Luft, zu Wasser und an Land, da die Generatorvorrichtung keinerlei Installationsaufbauten bedarf. Durch den schalenartigen Aufbau kann die Anlage auch optimal gegen die Sonne ausgerichtet werden, da die Schale ohne größere Probleme gedreht werden kann.
Zudem weist die Generatorvorrichtung eine weitere Gehäuseschale mit einem Randbereich auf. Die weitere Gehäuseschale ist über eine Gehäusegelenkverbindung mit der anderen Gehäuseschale verbunden, sodass der Randbereich der weiteren Gehäuseschale mit dem Randbereich der anderen Gehäuseschale zur Anlage bringbar ist. Somit kann das Solarpaneel in der Transportposition noch besser gegen Schäden geschützt werden, da es sich im Inneren der Schalen befindet. Denkbar ist hierbei, dass die Randbereiche der Gehäuseschalen durch geeignete Verschlussmittel aneinander befestigbar sind.
Gegenüber den aus dem Stand der Technik bekannten Generatorvorrichtungen zeichnet sich die erfindungsgemäße mobile Generatorvorrichtung insbesondere dadurch aus, dass die weitere Gehäuseschale wenigstens ein ausrichtbares Solarpaneel aufweist, wobei das Solarpaneel gelenkig mit der weiteren Gehäuseschale verbunden ist, sodass das Solarpaneel in der Transportposition innerhalb der weiteren Gehäuseschale ist und nicht über deren Randbereich hinausragt. Dadurch kann die zur Verfügung stehende Solarpaneelfläche - und somit der Energieertrag der Generatorvorrichtung - deutlich gesteigert werden. Hierbei sind die Gehäuseschalen vorzugsweise im Wesentlichen gespiegelt bzw. identisch, sodass auch die oben bereits genannten Vorteile zutreffen.

Ferner kann es auch vorteilhaft sein, wenn die Gehäusegelenkverbindung lösbar ist. Dadurch können die beiden Schalen getrennt voneinander bewegt werden. Insbesondere wenn in beiden Schalen Solarpaneele angeordnet sind, erlaubt dies eine individuelle Ausrichtung der Solarpaneele.
Es ist zweckmäßig, wenn jedes Solarpaneel eine Transportsicherung aufweist, so dass das Solarpaneel in seiner Transportposition innerhalb der Gehäuseschale festlegbar ist. Dadurch kann der Schutz vor Beschädigung nochmals erhöht werden. Hierbei ist es insbesondere von Vorteil, wenn die Transportsicherung einfach aufgebaut ist, und beispielsweise durch händisches Eindrehen einer Flügel- oder Rändelschraube zu bewerkstelligen ist.
Zweckmäßigerweise weist die Generatorvorrichtung für jedes Solarpaneel wenigstens eine innerhalb der Gehäuseschale angeordnete Schiene und einem der Schiene zugeordneten Verbindungsarm auf. Hierbei ist das Solarpaneel über eine Paneelgelenkverbindung mit einem Ende der Schiene verbunden. Die Schiene erstreckt sich senkrecht zur Drehachse der Paneelgelenkverbindung. Der Verbindungsarm ist über ein erstes Gelenk an seinem ersten Ende mit dem Solarpaneel verbunden und über ein zweites Gelenk an seinem zweiten Ende mit einem Schlitten verbunden, wobei der Schlitten entlang der Schiene bewegbar ist, sodass das Solarpaneel stufenlos in verschiedene Betriebsposition ausrichtbar ist. Dies hat den Vorteil, dass die Neigung des Solarpaneels durch bloßes Verschieben des Schlittens eingestellt werden kann. Somit kann das Solarpaneel schnell und einfach in die gewünschte Betriebsposition gebracht werden bzw. gegen die Sonne ausgerichtet werden.
Ferner ist es vorteilhaft, wenn der Schlitten in seiner Position entlang der Schiene fixierbar ist. Somit kann ein ungewolltes Verstellen der Neigung des Solarpaneels verhindert werden. Vorteilhafterweise ist die Schiene lösbar mit der Gehäuseschale verbunden. Dies eröffnet die Möglichkeit, die Solarpaneele auch ohne die Schale zu verwenden. Beispielsweise können die Solarpaneele somit fest auf einem Dach oder an einer Wand befestigt werden.
Alternativ hat es sich als zweckmäßig herausgestellt, wenn jedes Solarpaneel über wenigstens eine Paneelgelenkverbindung mit der Gehäuseschale verbunden ist, und die Gehäuseschale wenigstens eine Lochleiste aufweist. Die Lochleiste erstreckt sich hierbei senkrecht zur Drehachse der Paneelgelenkverbindung. Das Solarpaneel weist einen Verbindungsarm auf, wobei der Verbindungsarm über ein erstes Gelenk an seinem ersten Ende mit dem Solarpaneel verbunden ist, und der Verbindungsarm an seinem zweiten Ende eine Aufnahme für einen Befestigungsstift aufweist. Der Verbindungsarm ist über den Befestigungsstift an verschiedenen Positionen entlang der Lochleiste befestigbar, so dass das Solarpaneel in verschiedene Betriebspositionen ausrichtbar ist. Diese alternative Lösung hat den Vorteil, dass die Neigung des Solarpaneels durch bloßes Umstecken des Befestigungsstifts eingestellt werden kann. Somit kann das Solarpaneel schnell und einfach in die gewünschte Betriebsposition gebracht werden bzw. gegen die Sonne ausgerichtet werden. Ferner verhindert der Befestigungsstift auch eine ungewollte Verstellung der Neigung des Solarpaneels.

Vorteilhafterweise ist das Solarpaneel lösbar mit der Gehäuseschale verbunden. Dies eröffnet die Möglichkeit, die Solarpaneele auch ohne die Schale zu verwenden. Beispielsweise können die Solarpaneele dann fest auf einem Dach oder an einer Wand befestigt werden.
Zweckmäßigerweise ist die Gehäuseschale aus wetterfestem Material, insbesondere aus Polyethylen, hergestellt. Dadurch wird die Schale besonders leicht und widerstandsfähig. Denkbar ist aber auch, dass die Schale aus Holz oder einem metallischen Werkstoff hergestellt wird.
Es ist vorteilhaft, wenn die Gehäuseschale wenigstens eine Kammer aufweist, wobei die Kammer mit Material zur Beschwerung befüllbar ist. Dadurch kann die Standsicherheit der Generatorvorrichtung erhöht werden.
Zweckmäßigerweise ist die Gehäuseschale mehrwandig aufgebaut, wobei die Gehäuseschale mindestens eine Öffnung zur Be- und Entfüllung der Gehäuseschale aufweist. Somit kann die Schale beispielsweise mit einer Flüssigkeit, feinem Kies oder Sand befüllt werden. Im entfüllten Zustand hat dies auch den Vorteil, dass die Schale steifer und gleichzeitig leichter wird. Durch den mehrwandigen Aufbau ist die Generatorvorrichtung auch schwimmbar zu gestalten.
Ferner kann zumindest eine Gehäuseschale Transportaufnahmen, insbesondere zum Transport mit einem Flurförderfahrzeug oder einem Luftfahrzeug, aufweisen. Dadurch kann die Generatorvorrichtung gut angehoben, umgesetzt und verladen werden. Unter einem Flurförderfahrzeug soll hierbei insbesondere ein Gabelstapler oder auch ein Hubwagen verstanden werden.
Zweckmäßigerweise weist die Gehäuseschale an der Außenseite Strukturen zur sicheren Stapelung mehrere Gehäuseschalen übereinander auf. Dies ist insbesondere beim Transport und bei der Lagerung der Generatorvorrichtung von Vorteil, da somit auf aufwändige Lager- und Transportsicherungen zumindest teilweise verzichtet werden kann.
Es ist vorteilhaft, wenn die Gehäuseschale wenigstens eine Öse zur Befestigung und/ oder zum Schutz gegen Diebstahl aufweist. Dadurch kann die Generatorvorrichtung noch besser transportiert werden. Die Ösen sind hierbei derart ausgestaltet, dass beispielsweise Rundschlingen zum schwebenden Transport eingefädelt werden können. Denkbar ist auch, dass Erdnägel oder dergleichen durch die Ösen getrieben werden, um so auch die Standfestigkeit der Generatorvorrichtung zu erhöhen und diese auch gegen Diebstahl zu sichern.
Zweckmäßigerweise weist die Gehäuseschale eine Mehrzahl von Tragegriffen auf. Die Tragegriffe erlauben den händischen Transport und sind auch bei der Verladung der Generatorvorrichtung hilfreich. Hierbei ist zweckmäßig, wenn entsprechende Verladehilfen, wie beispielsweise Tragegurte, angebracht werden können.
Des Weiteren betrifft die vorliegende Erfindung ein Kühlsystem mit einer erfindungsgemäßen Generatorvorrichtung und wenigstens einem Kühlkreislauf. Das Kühlsystem weist eine Steuerung und eine Kühlvorrichtung, insbesondere eine Kühltruhe auf. Das Kühlsystem zeichnet sich gegenüber den aus dem Stand der Technik bekannten Kühlsystemen insbesondere dadurch aus, dass die Energieversorgung des Kühlsystems über die mobile Generatorvorrichtung bereitgestellt wird und die Steuerung das Kühlsystem in Abhängigkeit von der Energieversorgung regelt. Dies hat den Vorteil, dass das Kühlsystem die Vorgaben und Kriterien der WHO einhält, und somit eine sichere Lagerung der Kühlgüter möglich ist.
In diesem Zusammenhang ist es auch vorteilhaft, wenn die Verbindung zwischen der Kühlvorrichtung und der mobilen Generatorvorrichtung und/ oder zwischen einzelnen Generatorvorrichtungen über eine Stecker-Schnellverbindung mit weiblichen und männlichen Teil hergestellt wird. Auch das einzelne Solarpanel selbst kann wiederum mit einer Stecker-Schnellverbindung mit der Gehäuseschale der Generatorvorrichtung verbunden sein. Insbesondere können hier Kabel mit entsprechenden 3P-Stecker bzw. 3P-Kupplungen Verwendung finden. Wenn mehrere mobile Generatorvorrichtungen die Energieversorgung für eine Kühlvorrichtung bereitstellen sollen ist es zweckmäßig, wenn mindestens eine Klemmleiste oder dergleichen zur Verbindung der Generatorvorrichtungen mit der Kühlvorrichtung eingesetzt wird. Mindestens zwei Generatorvorrichtungen können dabei über mindestens eine Kupplung trennbar miteinander verbunden sein, wobei die Kupplung direkt mit der Kühlvorrichtung oder wiederum mit einer anderen Kupplung verbindbar ist. Um hierbei fehlerhaftes Zusammenstecken zu vermeiden, können die Stecker-Schnellverbindungen in ihrer Form entsprechend ausgestaltet sein, dass diese nur eine Möglichkeit der Verbindung erlaubt. Auch eine farbliche oder anderweitige Kennzeichnung ist denkbar. Dadurch wird in vorteilhafter Weise ermöglicht, einzelne mobile Generatorvorrichtungen schnell und unkompliziert zu isolieren, wenn diese beispielsweise anderweitig eingesetzt werden sollen oder einen Defekt aufweisen. Zudem kann das einzelne Solarpanel von der Gehäuseschale mittels der Stecker-Schnellverbindung getrennt werden, um es gegen ein anderes Solarpanel auszutauschen oder es bspw. separat von der Gehäuseschale direkt auf einem Hausdach zu montieren.
Nachfolgend wird die Erfindung anhand der in den Figuren dargestellten Ausführungsbeispiele näher erläutert. Darin zeigen schematisch:
- Fig. 1: ein erstes Ausführungsbeispiel einer erfindungsgemäßen mobilen Generatorvorrichtung;
- Fig. 2: eine Detailansicht des Verstellmechanismus der in Fig. 1 dargestellten Generatorvorrichtung;
- Fig. 3: drei Betriebspositionen der in Fig. 1 dargestellte Generatorvorrichtung;
- Fig. 4: ein Beispiel einer mobilen Generatorvorrichtung, die nicht Gegenstand der Erfindung ist;

- Fig. 5: eine Draufsicht der in Fig. 4 dargestellten Generatorvorrichtung;
- Fig. 6: eine Detailansicht des Verstellmechanismus der in Fig. 4 dargestellten Generatorvorrichtung;
- Fig. 7: sechs Betriebspositionen und die Transportposition der in Fig. 4 dargestellte Generatorvorrichtung;
- Fig. 8: zwei wie in Fig. 4 dargestellte übereinander gestapelte Generatorvorrichtungen; und
- Fig. 9: Detailansichten der in Fig. 4 dargestellten Generatorvorrichtung.

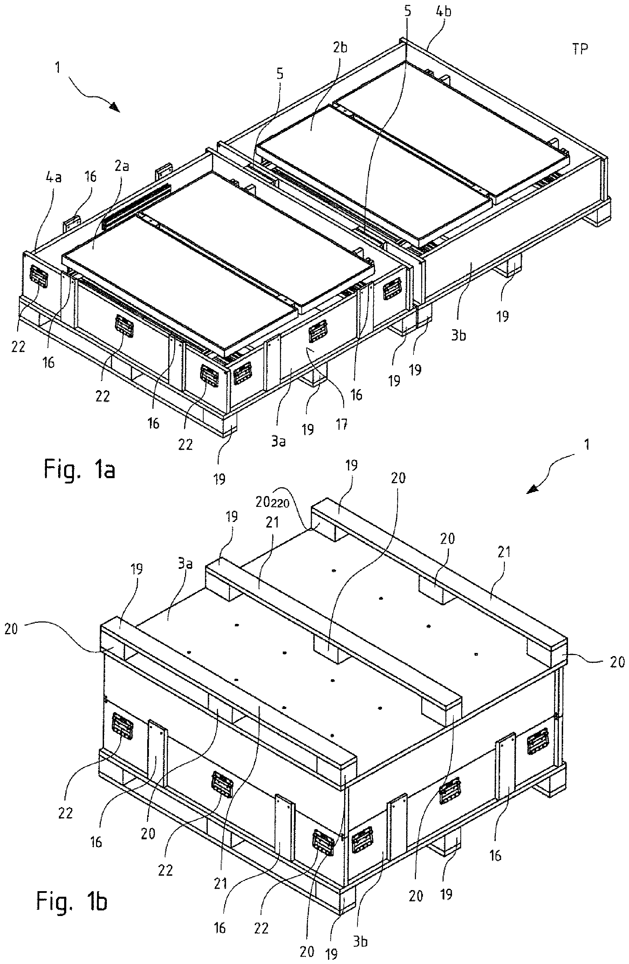

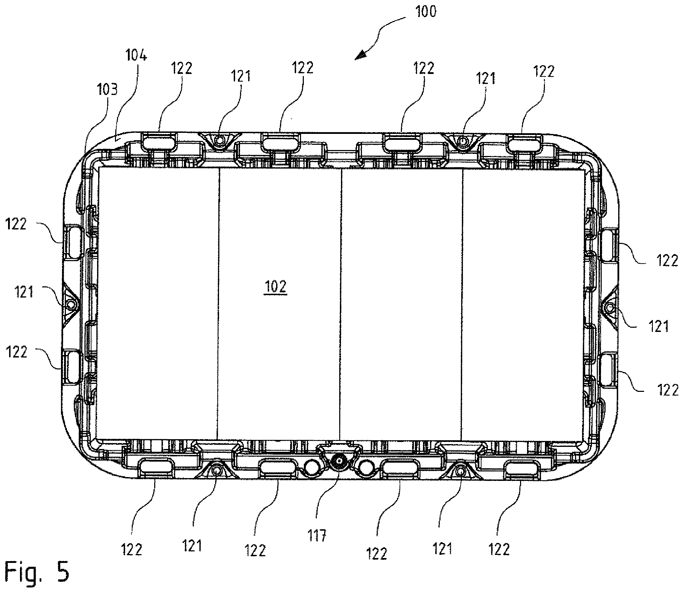

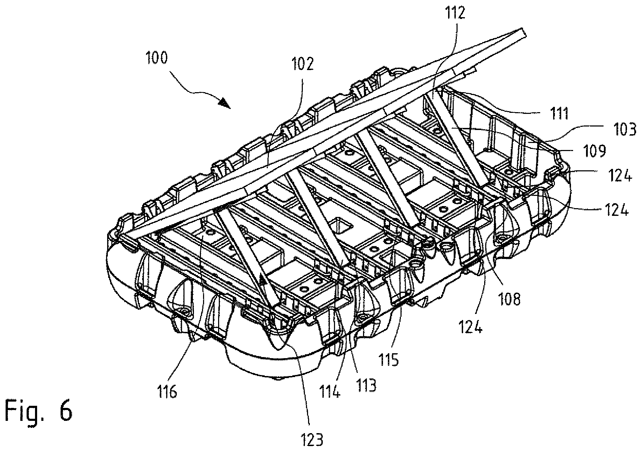

In den Fig. 1 bis 3 ist ein erstes Ausführungsbeispiel einer erfindungsgemäßen mobilen Generatorvorrichtung 1 dargestellt. Die in Fig. 1a und 1b gezeigte Generatorvorrichtung 1 weist zwei einwandige Gehäuseschalen 3a, 3b und zwei Solarpaneele 2a, 2b auf, wobei ein Solarpaneel 2a, 2b in jeder Gehäuseschale 3a, 3b angeordnet ist. Die Gehäuseschalen 3a, 3b weisen ferner jeweils einen Randbereich 4a, 4b auf und sind mit Gelenken bzw. Scharnieren 5 verbunden. Die Scharniere 5 definieren hierbei eine Drehachse, über welche die eine Gehäuseschale 3b so in Richtung der anderen Gehäuseschale 3a bewegt werden kann, so dass die Randbereiche 4a, 4b der Gehäuseschalen 3a, 3b zur Anlage kommen. Dieser Zustand ist in Fig. 1b gezeigt.
In der Darstellung gemäß Fig. 1a sind die Solarpaneele 2a, 2b in beiden Schalen 3a, 3b in der Transportposition TP dargestellt. Die Solarpaneele 2a, 2b sind so innerhalb der entsprechenden Gehäuseschale 3a, 3b angeordnet, dass sie nicht über den Randbereich 4a, 4b hinausragen, wodurch eine Beschädigung an den Solarpaneelen 2a, 2b durch das Zusammenklappen der Gehäuseschalen 3a, 3b vermieden wird.
Ferner weist eine Gehäuseschale 3a Tragegriffe 22 auf, die auf gegenüberliegenden Seiten der Gehäuseschale 3a angeordnet sind. In diesem Ausführungsbeispiel sind je Seite drei Tragegriffe 22 vorgesehen. Ferner weist eine Gehäuseschale 3a mehrere Stege 16 am Außenumfang 17 auf. Diese Stege verhindern einen Versatz zwischen den Randbereichen 4a, 4b der beiden Gehäuseschalen 3a, 3b, wenn diese sich im zusammengeklappten Zustand befinden. Die Funktionsweise der Stege 16 kann man insbesondere Fig. 1b entnehmen. Die Gehäuseschalen 3a, 3b weisen des Weiteren drei Transportaufnahmen 19 auf, wobei jede Transportaufnahme 19 aus drei Klötzen 20 und einem Verbindungsbrett 21 besteht. Durch die parallele Anordnung der Transportaufnahmen 19 über die gesamte Decken- bzw. Bodenfläche der Gehäuseschalen 3a, 3b ergibt sich die Möglichkeit, die Generatorvorrichtung 1 von allen vier Seiten mit einem Flurförderfahrzeug oder Luftfahrzeug aufzunehmen bzw. zu befördern.

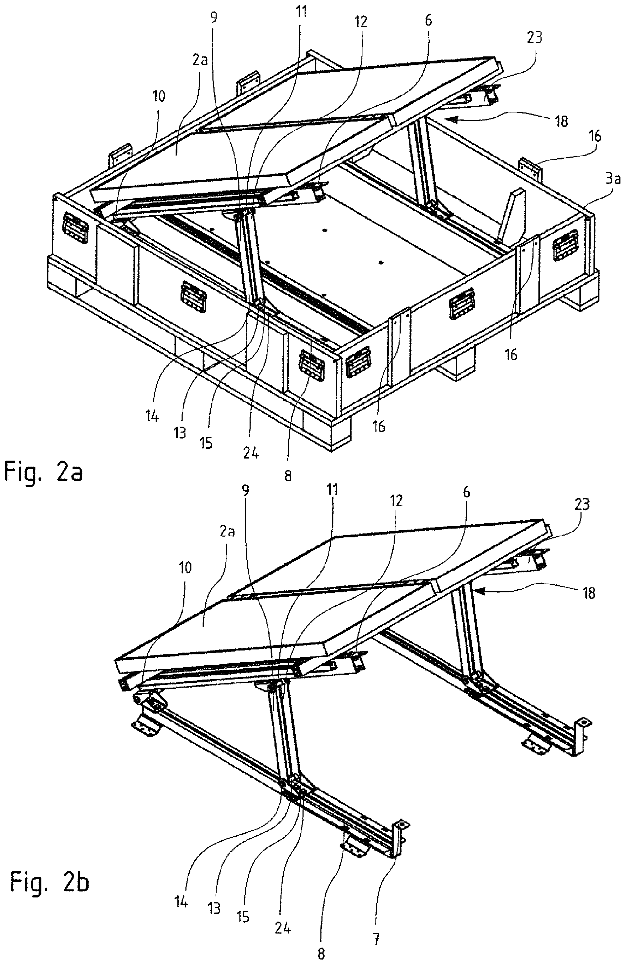

In den Fig. 2a und 2b sind Detailansichten eines erfindungsgemäßen lineargeführten Verstellmechanismus 18 dargestellt, mit welchem das Solarpaneel 2a zwischen der Transportposition TP und einer Vielzahl an Betriebspositionen BP verstellt ausgerichtet werden kann. Fig. 2b zeigt hierbei das Solarpaneel 2a ohne die Gehäuseschale 3a. In diesem Ausführungsbeispiel ist das Solarpaneel 2a auf einem Rahmen 23 montiert, wobei die Ausrichtung des Solarpaneels 2a über zwei Linearführungen erfolgt. Im Folgenden wird nur eine Linearführung näher beschrieben, da beide Führungen im Wesentlichen gleich sind. Das Solarpaneel 2a bzw. der Rahmen 23 auf dem das Solarpaneel 2a montiert ist, ist mit einer Seite über eine Gelenkverbindung 10 mit einer Schiene 8 verbunden. Die Schiene 8 erstreckt sich hierbei senkrecht von der durch die Gelenkverbindung 10 definierten Drehachse und parallel zur Bodenfläche der Gehäuseschale 3a. An der Rückseite des Solarpaneels 2a bzw. des Rahmens 23 ist ein Verbindungsarm 9 mit seinem ersten Ende 12 über ein erstes Gelenk 11 befestigt. Der Verbindungsarm 9 ist mit seinem zweiten Ende 14 über ein zweites Gelenk 13 an einem Schlitten 15 befestigt. Der Schlitten 15 läuft entlang eines Profils der Schiene 8, wobei hier ein umgedrehtes T-Profil Verwendung findet. Ferner weist der Schlitten 15 ein Befestigungsmittel 24 auf, mit welchen der Schlitten 15 in seiner Position entlang der Schiene 8 fixierbar ist. Wie dargestellt können hierzu beispielsweise zwei Schrauben vorgesehen sein, durch welche der Schlitten 15 formschlüssig an dem Schienenprofil festgeklemmt werden kann. Denkbar ist auch, dass die Befestigungsmittel 24 nur an einem Schlitten 15 vorgesehen sind. Somit kann das Solarpaneel 2a stufenlos in seiner Neigung verstellt werden.
Ferner ist in Fig. 2b auch die Transportsicherung 6, 7 zur Sicherung des Solarpaneels 2a in seiner Transportposition TP dargestellt. Die Transportsicherung 6, 7 besteht aus einer ersten Lasche 6 mit einer Bohrung am freien Ende der ersten Lasche und einer zweiten Lasche 7 mit einen Gewinde am freien Ende der zweiten Lasche. Die erste Lasche 6 ist am Solarpaneel 2a bzw. am Rahmen des Solarpaneels 2a angeordnet und die zweite Lasche 7 ist so an der Gehäuseschale 3a angeordnet, dass das freie Ende der ersten Lasche 6 mit dem freien Ende der zweiten Lasche 7 zur Anlage kommt, wenn das Solarpaneel 2a in der Transportposition TP ist. Sodann kann durch die Bohrung der ersten Lasche 6 eine Gewindeschraube, insbesondere eine Flügelschraube, in das Gewinde der zweiten Lasche 7 eingeschraubt werden und somit die Transportsicherung bilden.

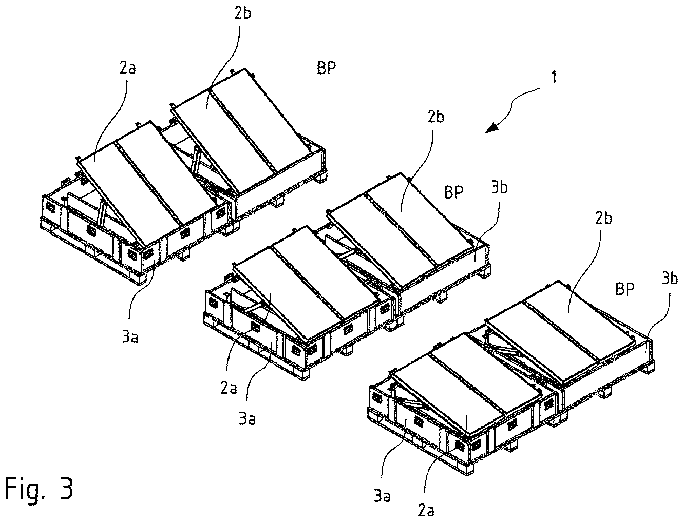

In Fig. 3 ist die in Fig. 1 dargestellte Generatorvorrichtung 1 in verschiedenen Betriebspositionen BP dargestellt. Je nach Sonneneinstrahlung bzw. Jahreszeit kann eine starke bzw. eine eher flache Neigung als Betriebsposition BP der Solarpaneele 2a, 2b gewählt werden.

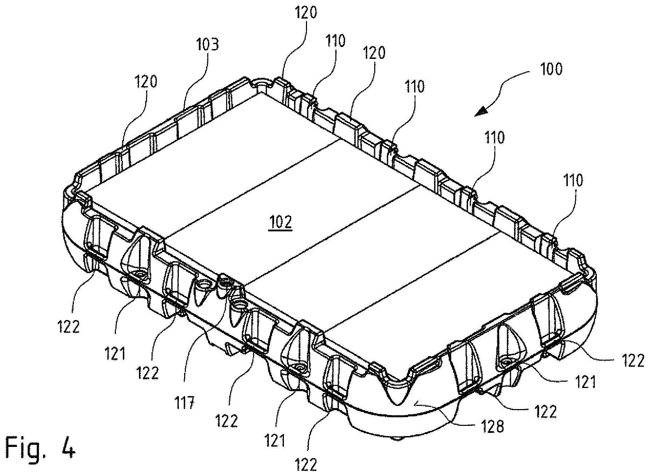

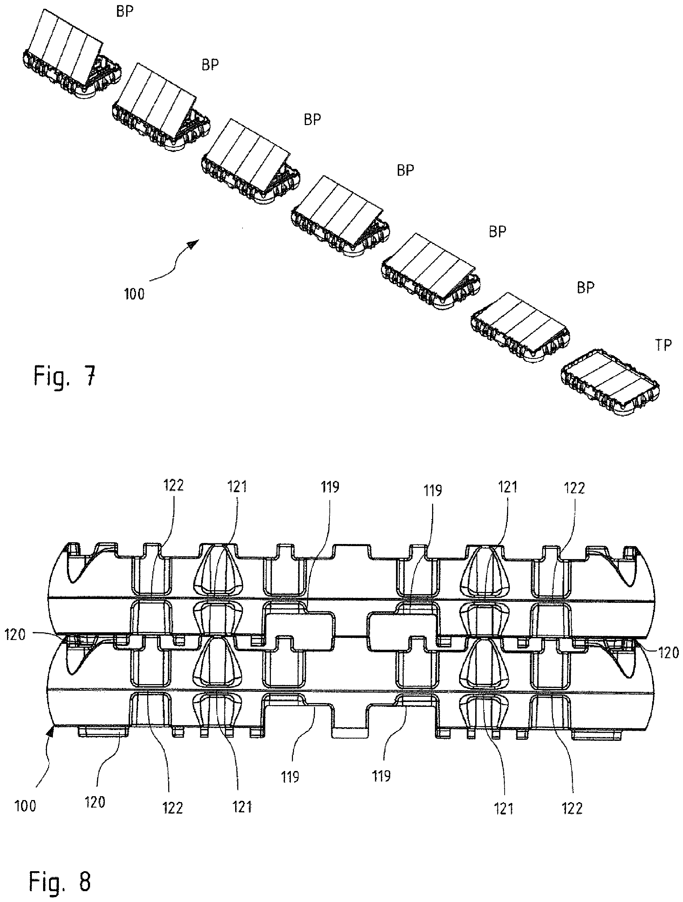

In den Fig. 4 bis 8 ist ein Beispiel, das nicht Gegenstand der Erfindung ist, eines mobilen Generatorvorrichtung 100 dargestellt. Die Generatorvorrichtung 100 weist eine mehrwandige Gehäuseschalen 103 mit einem Randbereich 104 und ein in dieser Gehäuseschale 103 angeordnetes Solarpaneel 102 auf. Wie in Fig. 4 gezeigt, ist das Solarpaneel 102 in der dargestellten Transportposition TP so innerhalb der Gehäuseschale 103 gelagert, dass es nicht über den Randbereich 104 der Gehäuseschale 103 hinausragt. Der Randbereich 104 weist eine Vielzahl an Strukturen 120 auf, die mit entsprechenden Strukturen 120 an der Unterseite einer anderen Gehäuseschale 103 zusammenwirken können, sodass mehrere Generatorvorrichtungen 100 sicher übereinander gestapelt werden können (siehe Fig. 8).
Ferner weist die Gehäuseschale 103 eine Vielzahl von Tragegriffen 122 und Ösen 121 auf, welche am Außenumfang 128 verteil sind. In diesem Beispiel sind insgesamt zwölf Tragegriffe 122 und sechs Ösen 121 am Außenumfang 128 verteilt.
Wie in Fig. 4 und 5 dargestellt, ist das Solarpaneel 102 über vier Paneelgelenkverbindungen 110 drehbar an der Gehäuseschale 103 befestigt, wobei die Paneelgelenkverbindungen 110 eine Drehachse definieren. Entlang dieser Drehachse kann das Solarpaneel 102 in die Betriebspositionen BP ausgerichtet werden. Dies geschieht über die in Fig. 6 näher dargestellten Verstellmechanismen 123. Im Folgenden wird nur ein Verstellmechanismus 123 näher beschrieben, da die Verstellmechanismen 123 dieses Ausführungsbeispiels identisch aufgebaut sind. Die Gehäuseschale 103 weist zwei parallele Lochleisten 108 auf, welche sich parallel zur Bodenfläche der Gehäuseschale 103 und senkrecht zur Drehachse der Paneelgelenkverbindungen 110 erstrecken. Die Lochleisten 108 weisen in regelmäßigen Abständen gegenüberliegende Löcher 124 auf. Ein Verbindungsarm 109 ist mit seinem ersten Ende 112 über ein Gelenk 111 mit der Rückseite des Solarpaneels 102 verbunden und weist an seinem zweiten Ende 114 eine Aufnahme 113 für einen Befestigungsstift 115 auf. Zur Fixierung der Position des Verbindungsarms 109 wird der Befestigungsstift 115 durch die Löcher 124 der Lochleisten 108 und die Aufnahme 113 des Verbindungsarms 109 gesteckt. Durch Umstecken des Befestigungsstifts 115 kann so die Neigung des Solarpaneels 102 und somit die verschiedenen Betriebspositionen BP eingestellt werden.
Ferner ist in Fig. 6 auch eine Kammer 116 dargestellt, in welche Material zur Beschwerung eingefüllt werden kann. Dies erhöht die Standsicherheit der mobilen Generatorvorrichtung 100.
In Fig. 7 sind sechs verschiedene Betriebspositionen BP des Solarpaneels 102 sowie die Transportposition TP dargestellt. Somit kann das Solarpaneel 102 je nach Sonneneinstrahlung stufenweise in seiner Neigung verstellt werden.
Fig. 8 zeigt übereinander gestapelte Generatorvorrichtungen 100. Jede Gehäuseschale 103 weist am Randbereich 104 und am Boden entsprechende Strukturen 120 auf, welche so zusammenwirken, dass eine sichere Stapelung von mehreren Generatorvorrichtungen 100 möglich ist. Im gestapelten Zustand liegen die Strukturen 120 am Randbereich 104 der unteren Generatorvorrichtung 100 in Richtung des Solarpaneels 102 gesehen hinter den Strukturen 120 am Boden der oberen Generatorvorrichtung 100. Somit ist ein seitliches Abrutschen der oberen Generatorvorrichtung 100 unmöglich. Ferner sind in Fig. 8 auch zwei kanalartige Transportaufnahmen 119 an jeder Generatorvorrichtung 100 dargestellt. Diese Transportaufnahmen 119 dienen zur Beförderung der Generatorvorrichtung 100 mit einem Flurförderfahrzeug. Um die Beförderbarkeit zu gewährleisten sind am Randbereich 104 oberhalb der Transportaufnahmen 119 keine Strukturen 120 zur Stapelung vorgesehen.

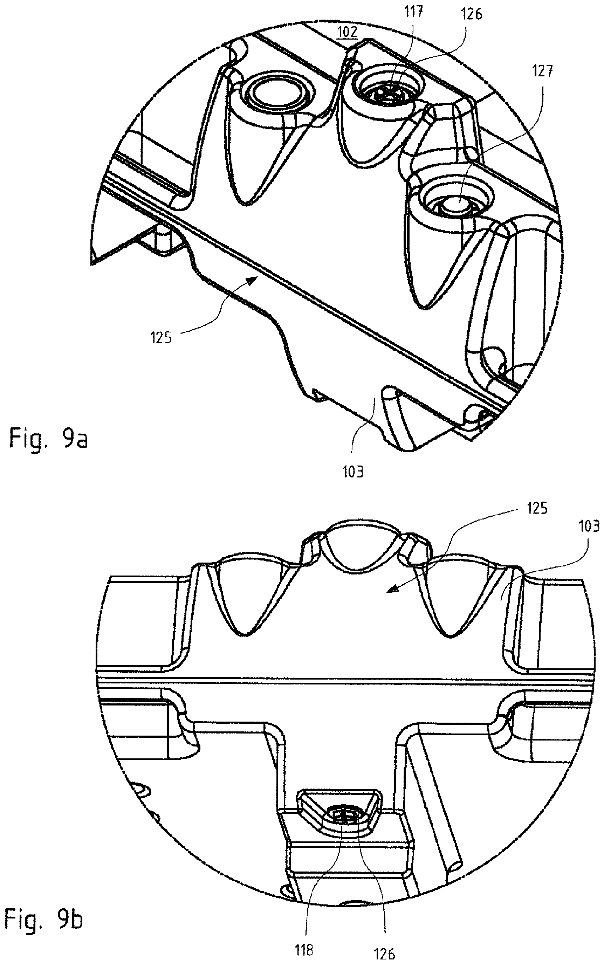

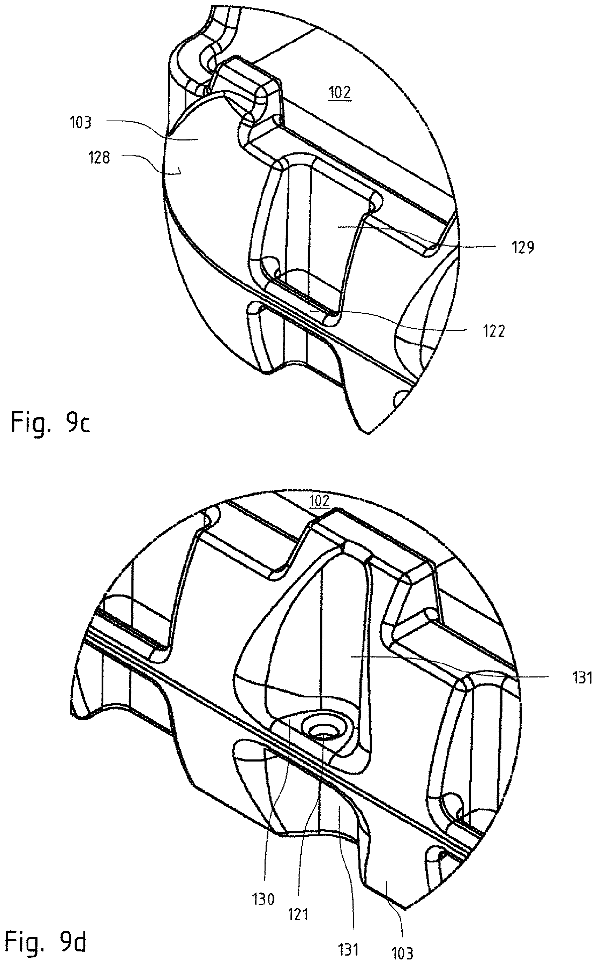

In der Fig. 9 sind vergrößerte Ansichten verschiedener Details der mobilen Generatorvorrichtung 100 dargestellt. Die Fig. 9a und 9b zeigen hierbei ein Be- und Entfülleinrichtung 125 mit der eine Flüssigkeit oder ein anderer Stoff, wie beispielsweise Sand, in die mehrwandige Gehäuseschale 103 gefüllt bzw. aus dieser abgelassen werden kann. Hierzu weist die Be- und Entfülleinrichtung 125 zwei Ventile 117, 118 auf, wobei ein Ventil 117 nach oben (vgl. Fig. 9a) und ein Ventil 118 nach unten (vgl. Fig. 9b) weist, sodass eine Be- und Entfüllung über die Schwerkraft erfolgen kann. Die Ventile 117, 118 können zum Verschließen ein geeignetes Verschlussmittel 126, beispielsweise ein Schraubverschlüssmittel oder auch einen Stöpselverschlussmittel aufweisen. Um beim Be- und Entfüllen die Be- und Entlüftung der mehrwandigen Gehäuseschale zu gewährleisten, weist die Be- und Entfülleinrichtung eine weitere Öffnung 127 auf, welche wie das Ventil 117 nach oben weist. Bedingt durch den mehrwandigen Aufbau der Gehäuseschale 103 ist diese auch schwimmfähig.

Fig. 9c zeigt eine vergrößerte Darstellung der am Außenumfang der Gehäuseschale 103 verteilten Tragegriffe 122. Wie gut zu erkennen sind die Tragegriffe 122 brückenartig über einer senkrechten Vertiefung 129 der Gehäuseschale 103 ausgeführt. Somit ist ausreichend Platz, um beispielsweise eine Rundschlinge einzufädeln, oder auch einen Haken oder Karabiner zum Transport der Generatorvorrichtung 100 an den Tragegriffen 122 anzubringen.

In Fig. 9d ist eine vergrößerte Darstellung der am Außenumfang 128 der Gehäuseschalen 103 verteilten Ösen 121 dargestellt. Die Öse 121 ist auf einer Lasche 130 angeordnet, welche sich ihrerseits von einer senkrechten Vertiefung 131 der Gehäuseschate 103 erstreckt. Somit ist die Lasche 130 parallel zum Boden der Gehäuseschale 103. Durch die Vertiefung 131 ist ausreichend Platz zur Verfügung, um beispielsweise Transportmittel, Diebstahlsicherungen oder Erdnägel an der Öse 121 zu befestigen.

### Bezugszeichenliste

- 1: Generatorvorrichtung
- 2a, 2b: Solarpaneel
- 3a, 3b: Gehäuseschale
- 4a, 4b: Randbereich
- 5: Gelenkverbindung
- 6: Lasche
- 7: Lasche
- 8: Schiene
- 9: Verbindungsarm
- 10: Paneelgelenkverbindung
- 11: erstes Gelenk
- 12: erstes Ende des Verbindungsarms
- 13: zweite Gelenk
- 14: zweites Ende des Verbindungsarms
- 15: Schlitten
- 16: Stege
- 17: Außenumfang
- 18: Verstellmechanismus
- 19: Transportaufnahme
- 20: Klötze
- 21: Verbindungsbrett
- 22: Tragegriff
- 23: Rahmen
- 24: Befestigungsmittel

- 102: Solarpaneel
- 103: Gehäuseschale
- 104: Randbereich
- 108: Lochleiste
- 109: Verbindungsarm
- 110: Paneelgelenkverbindung
- 111: erstes Gelenk
- 112: erstes Ende des Verbindungsarms
- 113: Aufnahme
- 114: zweites Endes des Verbindungsarms
- 115: Befestigungsstift
- 116: Kammer
- 117: Öffnung/ Ventil
- 118: Öffnung/ Ventil
- 119: Transportaufnahme
- 120: Struktur
- 121: Öse
- 122: Tragegriff
- 123: Verstellmechanismus
- 124: Löcher
- 125: Be- und Entfülleinrichtung
- 126: Veschlussmittel
- 127: Be-/ Entlüftungsöffnung
- 128: Außenumfang
- 129: Vertiefung
- 130: Lasche
- 131: Vertiefung

- TP: Transportposition
- BP: Betriebsposition

## Patentansprüche

1. Mobile Generatorvorrichtung (1, 100) mit wenigstens einem ausrichtbaren Solarpaneel (2a, 2b, 102), wobei das Solarpaneel (2a, 2b, 102) in eine Transportposition (TP) und wenigstens eine Betriebsposition (BP) bewegbar ist,
wobei die Generatorvorrichtung (1, 100) eine Gehäuseschale (3a, 103) mit einem Randbereich (4,104) aufweist, wobei das Solarpaneel (2a, 102) gelenkig mit der Gehäuseschale (3a, 103) verbunden ist, sodass das Solarpaneel (2a, 102) in der Transportposition (TP) innerhalb der Gehäuseschale (3a, 103) ist und nicht über den Randbereich (4, 104) hinausragt;
wobei die Generatorvorrichtung (1) eine weitere Gehäuseschale (3b) mit einem Randbereich (4b) aufweist, wobei die weitere Gehäuseschale (3b) über eine Gehäusegelenkverbindung (5) mit der anderen Gehäuseschale (3a) verbunden ist, sodass der Randbereich (4b) der weiteren Gehäuseschale (3b) mit dem Randbereich (4a) der anderen Gehäuseschale (3a) zur Anlage bringbar ist,
**dadurch gekennzeichnet, dass**
die weitere Gehäuseschale (3b) wenigstens ein ausrichtbares Solarpaneel (2b) aufweist, wobei das Solarpaneel (2b) gelenkig mit der weiteren Gehäuseschale (3b) verbunden ist, sodass das Solarpaneel (2b) in der Transportposition (TP) innerhalb der weiteren Gehäuseschale (3b) ist und nicht über den Randbereich (4b) hinausragt.

2. Mobile Generatorvorrichtung (1) nach Anspruch 1,
**dadurch gekennzeichnet, dass**
die Gehäusegelenkverbindung (5) lösbar ist.

3. Mobile Generatorvorrichtung (1) nach Anspruch 1 oder 2,
**dadurch gekennzeichnet, dass**
das jedes Solarpaneel (2a, 2b) eine Transportsicherung (6, 7) aufweist, sodass das Solarpaneel (2a, 2b) in seiner Transportposition (TP) innerhalb der Gehäuseschale (3a, 3b) festlegbar ist.

4. Mobile Generatorvorrichtung (1) nach einem der vorhergehenden Ansprüche,
**dadurch gekennzeichnet, dass**
die Generatorvorrichtung (1) für jedes Solarpaneel (2a, 2b) wenigstens eine innerhalb der Gehäuseschale (3a, 3b) angeordnete Schiene (8) und einem der Schiene (8) zugeordneten Verbindungsarm (9) aufweist, wobei das Solarpaneel (2a, 2b) über eine Paneelgelenkverbindung (10) mit einem Ende der Schiene (8) verbunden ist und sich die Schiene (8) senkrecht zur Drehachse der Paneelgelenkverbindung (10) erstreckt, und der Verbindungsarm (9) über ein erstes Gelenk (11) an seinem ersten Ende (12) mit dem Solarpaneel (2a, 2b) verbunden ist, und über ein zweites Gelenk (13) an seinem zweiten Ende (14) mit einem Schlitten (15) verbunden ist, wobei der Schlitten (15) entlang der Schiene (8) bewegbar ist, sodass das Solarpaneel (2a, 2b) stufenlos in verschiedene Betriebsposition (BP) ausrichtbar ist.

5. Mobile Generatorvorrichtung (1) nach Anspruch 4,
**dadurch gekennzeichnet, dass**
der Schlitten (15) in seiner Position entlang der Schiene (8) fixierbar ist.

6. Mobile Generatorvorrichtung (1) nach Anspruch 4 oder 5,
**dadurch gekennzeichnet, dass**
die Schiene (8) lösbar mit der Gehäuseschale (3a, 3b) verbunden ist.

7. Mobile Generatorvorrichtung (100) nach einem der Ansprüche 1 bis 3,
**dadurch gekennzeichnet, dass**
jedes Solarpaneel (102) über wenigstens eine Paneelgelenkverbindung (110) mit der Gehäuseschale (103) verbunden ist, und die Gehäuseschale (103) wenigstens eine Lochleiste (108) aufweist, wobei sich die Lochleiste (108) senkrecht zur Drehachse der Paneelgelenkverbindung (110) erstreckt, und das Solarpaneel (102) einen Verbindungsarm (109) aufweist, wobei der Verbindungsarm (109) über ein erstes Gelenk (111) an seinem ersten Ende (112) mit dem Solarpaneel (102) verbunden ist, und der Verbindungsarm (109) an seinem zweiten Ende (114) eine Aufnahme (113) für einen Befestigungsstift (115) aufweist, wobei der Verbindungsarm (109) über den Befestigungsstift (115) an verschiedenen Positionen entlang der Lochleiste (108) befestigbar ist, sodass das Solarpaneel (102) in verschiedene Betriebspositionen (BP) ausrichtbar ist.

8. Mobile Generatorvorrichtung (100) nach Anspruch 7,
**dadurch gekennzeichnet, dass**
das Solarpaneel (102) lösbar mit der Gehäuseschale (103) verbunden ist.

9. Mobile Generatorvorrichtung (1, 100) nach einem der vorhergehenden Ansprüche,
**dadurch gekennzeichnet, dass**
die Gehäuseschale (3a, 3b, 103) aus wetterfestem Material, insbesondere aus Polyethylen, hergestellt ist.

10. Mobile Generatorvorrichtung (100), nach einem der vorhergehenden Ansprüche,
**dadurch gekennzeichnet, dass**
die Gehäuseschale (103) wenigsten eine Kammer (116) aufweist, wobei die Kammer (116) mit Material zur Beschwerung befüllbar ist.

11. Mobile Generatorvorrichtung (100), nach einem der vorhergehenden Ansprüche,
**dadurch gekennzeichnet, dass**
die Gehäuseschale (103) mehrwandig aufgebaut ist, wobei die Gehäuseschale (103) mindestens eine Öffnung (117, 118) zur Be- und Entfüllung der Gehäuseschale (103) aufweist.

12. Mobile Generatorvorrichtung (1, 100) nach einem der vorhergehenden Ansprüche,
**dadurch gekennzeichnet, dass**
zumindest eine Gehäuseschale (3a, 3b, 103) Transportaufnahmen (19, 119), insbesondere zum Transport mit einem Flurförderfahrzeug, aufweist.

13. Mobile Generatorvorrichtung (100) nach einem der vorhergehenden Ansprüche,
**dadurch gekennzeichnet, dass**
die Gehäuseschale (103) an der Außenseite Strukturen (120) zur sicheren Stapelung mehrere Gehäuseschalen (103) übereinander aufweist.

14. Mobile Generatorvorrichtung (100) nach einem der vorhergehenden Ansprüche,
**dadurch gekennzeichnet, dass**
die Gehäuseschale (103) wenigstens eine Öse (121) zur Befestigung und/ oder zum Schutz gegen Diebstahl aufweist.

15. Mobile Generatorvorrichtung (1, 100) nach einem der vorhergehenden Ansprüche,
**dadurch gekennzeichnet, dass**
die Gehäuseschale (3a, 103) eine Mehrzahl von Tragegriffen (22, 122) aufweist.

16. Kühlsystem mit einer mobilen Generatorvorrichtung (1, 100) nach einem der vorhergehenden Ansprüche 1 bis 15,
und einer Steuerung,
und einer Kühlvorrichtung, insbesondere einer Kühltruhe, mit wenigstens einem Kühlkreislauf, wobei der Kühlkreislauf einen Kompressor, einen Verdampfer und einen Kondensator aufweist,
**dadurch gekennzeichnet, dass**
die Energieversorgung des Kühlsystems über die mobile Generatorvorrichtung (1, 100) bereitgestellt wird und die Steuerung das Kühlsystem in Abhängigkeit von der Energieversorgung regelt.

## Claims

1. A mobile generator device (1, 100) having at least one alignable solar panel (2a, 2b, 102), wherein the solar panel (2a, 2b, 102) can be moved into a transport position (TP) and into at least one operating position (BP),
wherein the generator device (1, 100) has a housing shell (3a, 103) with a peripheral area (4, 104), wherein the solar panel (2a, 102) is articulated to the housing shell (3a, 103) so that the solar panel (2a, 102) in the transport position (TP) is within the housing shell (3a, 103) and does not project over the peripheral area (4, 104)
wherein the generator device (1) has a further housing shell (3b) with a peripheral area (4b), wherein the further housing shell (3b) is connected to the other housing shell (3a) by an articulated housing connection (5) so that the peripheral area (4b) of the further housing shell (3b) can be contacted with the peripheral area (4a) of the other housing shell (3a)
**characterized in that** the further housing shell (3b) has at least one alignable solar panel (2b), wherein the solar panel (2b) is articulated to the further housing shell (3b) so that the solar panel (2b) in the transport position (TP) is within the further housing shell (3b) and does not project over the peripheral area (4b).

2. The mobile generator device (1) according to claim 1,
**characterized in that**
the articulated housing connection (5) is detachable.

3. The mobile generator device (1) according to claim 1 or 2,
**characterized in that**
each solar panel (2a, 2b) has a transport locking device (6, 7) so that the solar panel (2a, 2b) can be fixed in its transport position (TP) within the housing shell (3a, 3b).

4. The mobile generator device (1) according to any one of the preceding claims,
**characterized in that**
the generator device (1) for each solar panel (2a, 2b) has at least one rail (8) disposed within the housing shell (3a, 3b) and a connecting arm (9) assigned to the rail (8), wherein the solar panel (2a, 2b) is connected to one end of the rail (8) by an articulated panel connection (10) and the rail (8) extends vertically to the rotational axis of the articulated panel connection (10), and the connecting arm (9) at its first end (12) is connected to the solar panel (2a, 2b) by a first articulation (11) and at its second end (14) is connected to a slide (15) by a second articulation (13), wherein the slide (15) can be moved along the rail (8) so that the solar panel (2a, 2b) can be continuously aligned towards different operating position (BP).

5. The mobile generator device (1) according to claim 4,
**characterized in that**
the slide (15) can be fixed in its position along the rail (8).

6. The mobile generator device (1) according to claim 4 or 5,
**characterized in that**
the rail (8) is detachably connected to the housing shell (3a, 3b).

7. The mobile generator device (100) according to any one of claims 1 to 3,
**characterized in that**
each solar panel (102) is connected to the housing shell (103) by at least one articulated panel connection (110) and the housing shell (103) has at least one perforated strip (108), wherein the perforated strip (108) extends vertically to the rotational axis of the articulated panel connection (110), and the solar panel (102) has a connecting arm (109), wherein the connecting arm (109) at its first end (112) is connected to the solar panel (102) by a first articulation (111), and the connecting arm (109) at its second end (114) has a receptacle (113) for a fastening pin (115), wherein the connecting arm (109) can be fixed at different positions along the perforated strip (108) via the fastening pin (115) so that the solar panel (102) can be aligned in different operating positions (BP).

8. The mobile generator device (100) according to claim 7,
**characterized in that**
the solar panel (102) is detachably connected to the housing shell (103).

9. The mobile generator device (1, 100) according to any one of the preceding claims,
**characterized in that**
the housing shell (3a, 3b, 103) is made of a weatherproofed material, in particular of polyethylene.

10. The mobile generator device (100) according to any one of the preceding claims,
**characterized in that**
the housing shell (103) has at least one chamber (116), wherein the chamber (116) can be filled with material to act as a weight.

11. The mobile generator device (100) according to any one of the preceding claims,
**characterized in that**
the housing shell (103) has a multi-wall construction, wherein the housing shell (103) has at least one opening (117, 118) for filling and discharging the housing shell (103).

12. The mobile generator device (1, 100) according to any one of the preceding claims,
**characterized in that**
at least one housing shell (3a, 3b, 103) has transport receptacles (19, 119), in particular for transportation with a fork lift truck.

13. The mobile generator device (100) according to any one of the preceding claims,
**characterized in that**
the housing shell (103) at the outside has structures (120) for safe stacking several housing shells (103) on top of each other.

14. The mobile generator device (100) according to any one of the preceding claims,
**characterized in that**
the housing shell (103) has at least one grommet (121) for fixation and/or for protection against theft.

15. The mobile generator device (1, 100) according to any one of the preceding claims,
**characterized in that**
the housing shell (3a, 103) has several handles (22, 122).

16. A cooling system having a mobile generator device (1, 100) according to any one of the preceding claims 1 to 15,
and a control,
and a cooling device, in particular a freezer, having at least one cooling circuit, wherein the cooling circuit has a compressor, an evaporator, and a condenser,
**characterized in that**
the power supply of the cooling system is provided by the mobile generator device (1, 100) and the control regulates the cooling system in dependence of the power supply.

## Revendications

1. Générateur mobile (1, 100) ayant au moins un panneau solaire ajustable (2a, 2b, 102), dans lequel le panneau solaire (2a, 2b, 102) peut passer en position de transport (TP) et en au moins une position d'opération (BP),
dans lequel le générateur mobile (1, 100) a un boîtier (3a, 300) avec une surface périphérique (4, 104), dans lequel le panneau solaire (2a, 102) est articulé au boîtier (3a, 103) de sorte que le panneau solaire (2a, 102) soit en position de transport (TP) à l'intérieur du boîtier (3a, 103) et qu'il ne dépasse pas la surface périphérique (4, 104) dans lequel le générateur mobile (1) a un boîtier supplémentaire (3b) avec une surface périphérique (4b), dans lequel le boîtier supplémentaire (3b) est connecté à l'autre boîtier (3a) par une articulation de boîtier (5) de sorte que la surface périphérique (4b) du boîtier supplémentaire (3b) puisse être en contact avec la surface périphérique (4a) de l'autre boîtier (3a)
**caractérisé en ce que** le boîtier supplémentaire (3b) a au moins un panneau solaire ajustable (2b), dans lequel le panneau solaire (2b) est articulé au boîtier supplémentaire (3b) de sorte que le panneau solaire (2b) soit en position de transport (TP) à l'intérieur du boîtier supplémentaire (3b) et qu'il ne dépasse pas la surface périphérique (4b).

2. Le générateur mobile (1) selon la revendication 1,
**caractérisé en ce que**
l'articulation de boîtier (5) est détachable.

3. Le générateur mobile (1) selon la revendication 1 ou 2,
**caractérisé en ce que**
chaque panneau solaire (2a, 2b) a un dispositif de verrouillage de transport (6, 7) de sorte que le panneau solaire (2a, 2b) puisse être maintenu en position de transport (TP) à l'intérieur du boîtier (3a, 3b).

4. Le générateur mobile (1) selon l'une quelconque des revendications précédentes,
**caractérisé en ce que**
le générateur mobile (1) a, pour chaque panneau solaire (2a, 2b), au moins un rail (8) disposé à l'intérieur du boîtier (3a, 3b) et un bras de connexion (9) assigné au rail (8), dans lequel le panneau solaire (2a, 2b) est connecté à une extrémité du rail (8) par une articulation de panneau (10) et le rail (8) s'étend verticalement de l'axe de rotation de l'articulation de panneau (10), et le bras de connexion (9) est, à sa première extrémité (12), connecté au panneau solaire (2a, 2b) par une première articulation (11) et est, à sa seconde extrémité (14), connecté à une glissière (15) par une seconde articulation (13),
dans lequel la glissière (15) peut se déplacer le long du rail (8) de sorte que le panneau solaire (2a, 2b) puisse être continuellement ajusté selon différentes positions d'opération (BP).

5. Le générateur mobile (1) selon la revendication 4,
**caractérisé en ce que**
la glissière (15) peut être fixée dans sa position le long du rail (8).

6. Le générateur mobile (1) selon la revendication 4 ou 5,
**caractérisé en ce que**
le rail (8) est connecté de manière détachable au boîtier (3a, 3b).

7. Le générateur mobile (100) selon l'une quelconque des revendications 1 à 3,
**caractérisé en ce que**
chaque panneau solaire (102) est connecté au boîtier (103) par au moins une articulation de boîtier (110) et le boîtier (103) a au moins une bande perforée (108), dans lequel la bande perforée (108) s'étend verticalement de l'axe de rotation de l'articulation de panneau (110), et le panneau solaire (102) a un bras de connexion (109), dans lequel le bras de connexion (109) est connecté, à sa première extrémité, au panneau solaire (102) par une première articulation (111), et le bras de connexion (109) a, à sa seconde extrémité, un réceptacle (113) pour une goupille de fixation (115), dans lequel le bras de connexion (109) peut être fixé à différentes positions le long de la bande perforée (108) via la goupille de fixation (115) de sorte que le panneau solaire (102) puisse être ajusté selon différentes positions d'opération (BP).

8. Le générateur mobile (100) selon la revendication 7,
**caractérisé en ce que**
le panneau solaire (102) est connecté de manière détachable au boîtier (103).

9. Le générateur mobile (1, 100) selon l'une quelconque des revendication précédentes,
**caractérisé en ce que**
le boîtier (3a, 3b, 103) est fait d'un matériau imperméable à l'eau, en particulier du polyéthylène.

10. Le générateur mobile (100) selon l'une quelconque des revendications précédentes,
**caractérisé en ce que**
le boîtier (103) a au moins une chambre (116), dans lequel la chambre (116) peut être remplie d'un matériau agissant comme un poids.

11. Le générateur mobile (100) selon l'une quelconque des revendications précédentes,
**caractérisé en ce que**
le boîtier (103) a une construction à parois multiples, dans lequel le boîtier (103) a au moins une ouverture (117, 118) pour remplir et vider le boîtier.

12. Le générateur mobile (1, 100) selon l'une quelconque des revendications précédentes,
**caractérisé en ce que**
au moins un boîtier (3a, 3b, 103) comprend des réceptacles de transport (19, 119), en particulier pour un transport par un chariot élévateur.

13. Le générateur mobile (100) selon l'une quelconque des revendications précédentes,
**caractérisé en ce que**
le boîtier (103) comprend, à l'extérieur, des structures (120) pour empiler de manière sure plusieurs boîtiers (103) les uns sur les autres.

14. Le générateur mobile (100) selon l'une quelconque des revendications précédentes,
**caractérisé en ce que**
le boîtier (103) comprend au moins un oeillet (121) pour la fixation et/ou la protection contre le vol.

15. Le générateur mobile (1, 100) selon l'une quelconque des revendications précédentes,
**caractérisé en ce que**
le boîtier (3a, 103) comprend plusieurs poignées (22, 122).

16. Système de réfrigération comprenant un générateur mobile (1, 100) selon l'une quelconque des revendications 1 à 15,
et un contrôleur,
et un dispositif de réfrigération, en particulier un congélateur, comprenant au moins un circuit de refroidissement, dans lequel le circuit de refroidissement comprend un compresseur, un évaporateur, et un condenseur,
**caractérisé en ce que**
la source d'alimentation du système de réfrigération est fournie par le générateur mobile (1, 100) et le contrôleur régule le système de refroidissement dépendamment de la source d'alimentation.
